(19) Europäisches Patentamt
European Patent Office
Office européen des brevets

(11) EP 3 029 006 B1

## (12) EUROPÄISCHE PATENTSCHRIFT

(45) Veröffentlichungstag und Bekanntmachung des Hinweises auf die Patenterteilung:
08.03.2017 Patentblatt 2017/10

(21) Anmeldenummer: 15175463.7

(22) Anmeldetag: 02.12.2014

(51) Int Cl.:
C04B 38/00 (2006.01)     C04B 111/28 (2006.01)
C04B 35/101 (2006.01)    C04B 35/107 (2006.01)
C04B 35/043 (2006.01)    C04B 35/103 (2006.01)
C04B 35/66 (2006.01)

### (54) VERSATZ ZUR HERSTELLUNG EINES FEUERFESTEN ERZEUGNISSES, VERFAHREN ZUR HERSTELLUNG EINES FEUERFESTEN ERZEUGNISSES, EIN FEUERFESTES ERZEUGNIS SOWIE EINE VERWENDUNG DES ERZEUGNISSES

REFRACTORY PRODUCT, RAW BATCH FOR PRODUCING THE PRODUCT, METHOD PRODUCING THE PRODUCT AND USE THEREOF.

PRODUIT REFRACTAIRE, MÉLANGE DE FABRICATION DU PRODUIT, PROCÉDÉ DE FABRICATION DU PRODUIT AINSI QU'UTILISATION DU PRODUIT.

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
08.06.2016 Patentblatt 2016/23

(62) Dokumentnummer(n) der früheren Anmeldung(en) nach Art. 76 EPÜ:
14195950.2 / 3 029 005

(73) Patentinhaber: Refractory Intellectual Property GmbH & Co. KG
1100 Wien (AT)

(72) Erfinder:
• Djuricic, Boro
8700 Leoben (AT)
• Freiberger, Norbert
8054 Graz (AT)
• Mühlhäusser, Jürgen
8700 Leoben (AT)
• Bauer, Christoph
8010 Graz (AT)

(74) Vertreter: Berkenbrink, Kai-Oliver
Patentanwälte Becker & Müller
Turmstrasse 22
40878 Ratingen (DE)

• LIU L F ET AL: "Microstructure and properties of Al2O3-TiC-Ti3SiC2 composites fabricated by spark plasma sintering", ADVANCES IN APPLIED CERAMICS: STRUCTURAL, FUNCTIONAL AND BIOCERAMICS, MANEY PUBLISHING, GB, Bd. 109, Nr. 7, 1. Oktober 2010 (2010-10-01), Seiten 394-398, XP009182325, ISSN: 1743-6753, DOI: 10.1179/174367510X12677121374465
• LUO Y ET AL: "Fabrication of Al2O3-Ti3SiC2 composites and mechanical properties evaluation", MATERIALS LETTERS, NORTH HOLLAND PUBLISHING COMPANY. AMSTERDAM, NL, Bd. 57, Nr. 16-17, 1. Mai 2003 (2003-05-01), Seiten 2509-2514, XP004418462, ISSN: 0167-577X, DOI: 10.1016/S0167-577X(02)01302-2
• YONGMING L ET AL: "Preparation and characterization of Al2O3-Ti3SiC2 composites and its functionally graded materials", MATERIALS RESEARCH BULLETIN, ELSEVIER, KIDLINGTON, GB, Bd. 38, Nr. 1, 1. Januar 2003 (2003-01-01) , Seiten 69-78, XP004399545, ISSN: 0025-5408, DOI: 10.1016/S0025-5408(02)01000-0

(56) Entgegenhaltungen:
US-A1- 2010 055 492

EP 3 029 006 B1

- YUAN-LIANG CHIN ET AL: "Contribution of plastic deformation of TiSiCto the crack deflection in the AlO/TiSiCcomposites", MATERIALS SCIENCE AND ENGINEERING A: STRUCTURAL MATERIALS:PROPERTIES, MICROSTRUCTURE & PROCESSING, LAUSANNE, CH, Bd. 528, Nr. 7, 21. Dezember 2010 (2010-12-21), Seiten 3270-3274, XP028357647, ISSN: 0921-5093, DOI: 10.1016/J.MSEA.2010.12.084 [gefunden am 2010-12-30]
- DATABASE WPI Week 201373 Thomson Scientific, London, GB; AN 2013-Q43802 XP002735549, -& CN 103 086 742 A (CHINESE ACAD SCI METAL RES INST) 8. Mai 2013 (2013-05-08)
- CHIN Y L ET AL: "Toughening alumina with layered Ti3SiC2 inclusions", JOURNAL OF ALLOYS AND COMPOUNDS, ELSEVIER SEQUOIA, LAUSANNE, CH, Bd. 491, Nr. 1-2, 18. Februar 2010 (2010-02-18), Seiten 477-482, XP026866789, ISSN: 0925-8388 [gefunden am 2009-11-01]
- "Effect of Composition on Properties of Alumina/Titanium Silicon Carbide Composites", J. AM. CERAM. SOC., 85 [12], 1 January 2002 (2002-01-01), pages 3099-3101,
- RACAULT C ET AL: "Solid-state synthesis and characterization of the ternary phase Ti3SiC2", JOURNAL OF MATERIALS SCIENCE, KLUWER ACADEMIC PUBLISHERS, DORDRECHT, vol. 29, no. 13, 1 January 1994 (1994-01-01), pages 3384-3392, XP009186631, ISSN: 0022-2461, DOI: 10.1007/BF00352037

**Beschreibung**

Die Erfindung betrifft einen Versatz zur Herstellung eines feuerfesten Erzeugnisses, ein Verfahren zur Herstellung eines feuerfesten Erzeugnisses, ein feuerfestes Erzeugnis sowie eine Verwendung des Erzeugnisses

Der Begriff "feuerfestes Erzeugnis" im Sinne der Erfindung bezeichnet insbesondere feuerfeste keramische Erzeugnisse mit einer Einsatztemperatur von über 600°C und bevorzugt feuerfeste Werkstoffe gemäß DIN 51060, also Werkstoffe mit einem Kegelfallpunkt > SK 17. Die Ermittlung des Kegelfallpunktes kann insbesondere gemäß DIN EN 993-12:1997 erfolgen.

Ein Versatz bezeichnet bekanntermaßen eine Zusammensetzung aus einer oder mehreren Komponenten, durch die mittels einer Temperaturbehandlung, also insbesondere mittels eines Brandes oder eines Schmelzprozesses, ein feuerfestes Erzeugnis herstellbar ist.

Feuerfeste Erzeugnisse sind bei ihrer Anwendung häufig aggressiven Flüssigkeiten und Gasen bei hohen Temperaturen ausgesetzt, beispielsweise Schlacken sowie Glas- oder Metallschmelzen. Diese können das feuerfeste Erzeugnis durch Risse und Poren infiltrieren, was zu einer Korrosion des Erzeugnisses führen kann. Zur Verbesserung der Korrosionsbeständigkeit feuerfester Erzeugnisse ist es daher häufig gewünscht, möglichst rissfreie Erzeugnisse mit möglichst wenigen und kleinen Poren zur Verfügung zu stellen. Solch hochdichte und weitgehend rissfreie feuerfeste Erzeugnisse weisen aufgrund der Sprödigkeit feuerfester Erzeugnisse jedoch häufig nur eine verhältnismäßig geringe Thermoschockbeständigkeit auf.

Aus dem Stand der Technik sind daher Technologien bekannt, die Sprödigkeit eines feuerfesten Erzeugnisses zu verringern beziehungsweise seine Thermoschockbeständigkeit und Gefügeelastizität zu verbessern.

So ist es beispielsweise bekannt, die Sprödigkeit feuerfester Erzeugnisse auf Basis Korund ($Al_2O_3$), Magnesia (MgO) und/oder Magnesiaspinell (MgO · $Al_2O_3$) durch sogenannte Elastifizierer, die in die Matrix des Erzeugnisses eingebunden werden, zu verringern und die Thermoschockbeständigkeit des Erzeugnisses hierdurch zu verbessern. Die Wirkungsweise dieser Elastifizierer beruht darauf, dass diese einen anderen Wärmeausdehnungskoeffizienten als die Hauptkomponente des feuerfesten Erzeugnisses aufweisen, so dass es bei der Temperaturbehandlung des Erzeugnisses und seiner anschließenden Abkühlung zu Spannungen zwischen dem Elastifizierer und der Hauptkomponente kommt. Hierdurch bilden sich Mikrorisse im Erzeugnis, die im Fall eines mechanischen Angriffs auf das Erzeugnis einen Teil der Bruchenergie kompensieren, wodurch die Gefahr eines Sprödigkeitsbruches des Erzeugnisses verringert werden kann. Nachteilig an der Verwendung solcher Elastifizierer ist jedoch, dass die Korrosionsbeständigkeit der Erzeugnisse aufgrund der erzeugten Mikrorisse sinken kann.

Ferner ist es bekannt, die Gefügeflexibilität feuerfester Erzeugnisse auf Basis Magnesia oder Korund durch Kohlenstoff zu verbessern. Problematisch bei solchen MgO-C-Steinen oder $Al_2O_3$-C-Steinen ist jedoch die geringe thermische Stabilität des Kohlenstoffs bei hohen Temperaturen, insbesondere in oxidierender Atmosphäre.

Der Erfindung liegt die Aufgabe zugrunde, ein feuerfestes Erzeugnis auf Basis Korund ($Al_2O_3$) zur Verfügung zu stellen, das eine hohe Thermoschockbeständigkeit aufweist. Eine weitere Aufgabe besteht darin, ein feuerfestes Erzeugnis auf Basis Korund mit einer hohen Gefügeelastizität zur Verfügung zu stellen. Eine weitere Aufgabe besteht darin, ein feuerfestes Erzeugnis auf Basis Korund mit einer geringen Sprödigkeit zur Verfügung zu stellen. Insbesondere besteht eine Aufgabe der Erfindung darin, ein feuerfestes Erzeugnis auf Basis Korund zur Verfügung zu stellen, das eine höhere Korrosionsbeständigkeit aufweist als die aus dem Stand der Technik bekannten feuerfesten Erzeugnisse auf Basis $Al_2O_3$, die zur Verbesserung ihrer Thermoschockbeständigkeit, Gefügeelastizität und Sprödigkeit einen Elastifizierer aufweisen.

Eine weitere Aufgabe der Erfindung besteht darin, ein feuerfestes Erzeugnis auf Basis Korund zur Verfügung zu stellen, das auch bei einer nur geringen Porosität eine hohe Thermoschockbeständigkeit, eine hohe Gefügeelastizität sowie eine geringe Sprödigkeit aufweist.

Eine weitere Aufgabe der Erfindung besteht darin, ein feuerfestes Erzeugnis auf Basis Korund zur Verfügung zu stellen, das auch bei hohen Temperaturen in oxidierender Atmosphäre eine hohe thermische Stabilität aufweist, insbesondere eine gegenüber $Al_2O_3$-C-Erzeugnissen verbesserte thermische Stabilität bei hohen Temperaturen in oxidierender Atmosphäre.

Eine weitere Aufgabe der Erfindung besteht darin, einen Versatz zur Herstellung eines solchen Erzeugnisses zur Verfügung zu stellen. Eine weitere Aufgabe der Erfindung besteht darin, einen solchen Versatz möglichst kostengünstig zur Verfügung zu stellen.

Zur Lösung der das Erzeugnis betreffenden Aufgaben wird erfindungsgemäß zur Verfügung gestellt ein Versatz nach Anspruch 1.

Überraschend hat sich im Rahmen der Erfindung herausgestellt, dass ein feuerfestes Erzeugnis auf Basis $Al_2O_3$, das die vorstehenden Aufgaben erfüllt, durch einen Versatz nach Anspruch 1 hergestellt werden kann.

Mit MAX-Phasen wird bekanntermaßen eine Materialklasse schichtförmiger Carbide und Nitride bezeichnet, die eine geschichtete Struktur ähnlich wie Graphit aufweisen, und die der allgemeinen Formel $M_{n+1}AX_n$ entsprechen, mit:

n = 1, 2 oder 3;

M = einem Übergangsmetall in Form von Sc, Ti, V, Cr, Zr, Nb, Mo, Hf oder Ta;

A = einem Element der A-Gruppe in Form von Al, Si, P, S, Ga, Ge, As, In, Sn, Tl oder Pb; und

X = C und/oder N.

Diese Materialklasse der MAX-Phasen wurde erstmalig in den 1990er Jahren synthetisiert und deren Eigenschaften beschrieben. Danach vereinen MAX-Phasen vorteilhafte Eigenschaften keramischer und metallischer Werkstoffe, beispielsweise eine hohe Elastizität, eine gute thermische und elektrische Leitfähigkeit, eine hohe chemische Korrosionsbeständigkeit, einen niedrigen thermischen Ausdehnungskoeffizienten sowie eine hohe Thermoschockbeständigkeit und Schadenstoleranz. Die Vickers-Härte polykristalliner MAX-Phasen liegen in der Regel im Bereich von 2 bis 8 GPa; insoweit sind MAX-Phasen weicher als die meisten geformten Keramiken, aber härter als die meisten Metalle [April 2013, American Ceramic Society Bulletin, Vol. 92, No. 3, Miladin Radovic and Michel W. Barsoum]. Zudem sind die meisten MAX-Phasen hoch oxidationsbeständig. Ferner erfahren MAX-Phasen bei hohen Temperaturen eine Umwandlung von einem spröderen zu einem plastischeren Verhalten hin ("brittle-to-plastic transition", BPT), wobei sie insbesondere auch ein plastisches Biegeverhalten aufweisen. Ein besonderes Unterscheidungsmerkmal von MAX-Phasen liegt insbesondere auch darin, dass diese in höchstem Grade schadenstolerant und Thermoschockbeständig sind und meist ohne weiteres maschinell bearbeitbar sind. Die Bruchzähigkeit von MAX-Phasen bei Raumtemperatur ($K_{Ic}$) liegt in der Regel im Bereich von 5 bis 20 $\mathrm{MPa}\sqrt{m}$ und damit verhältnismäßig hoch im Vergleich zur Bruchzähigkeit anderer Keramiken. Die hohen Werte der Bruchzähigkeit ($K_{Ic}$) und das R-Kurven-Verhalten finden ihre Ursache in der Bildung von plastisch, deformierbaren Brückenligamenten und risshemmenden Eigenschaften von Knickgrenzen. Eine weitere wichtige Eigenschaft von MAX-Phasen ist deren außergewöhnliche Thermoschockbeständigkeit. Anders als typische Keramiken, zerbrechen MAX-Phasen nicht einfach unter Last, sondern in einigen Fällen nimmt deren Restbiegefestigkeit auch nach einer Belastung bei Temperaturen von beispielsweise 1.200°C und einem anschließenden Abschrecken in Wasser mit Raumtemperatur sogar zu.

L. F. Liu et al ("Microstructure and properties of Al2O3-TiC-Ti3SiC2 composites fabricated by spark plasma sintering", Advances in Applied Ceramics: Structural, functional and bioceramics, Maney publishing, GB, Bd. 109, Nr. 7, 01. Oktober 2010, Seiten 394-398) beschreiben die Herstellung von hoch verdichteten $Al_2O_3$-TiC-$Ti_3SiC_2$ Kompositwerkstoffen auf Basis eines Versatzes aus Pulvern von $Al_2O_3$, TiC und $Ti_3SiC_2$. Y. M. Luo et al ("Effect of Composition on Poperties of Alumina/Titanium Silicon Carbide Composites", J. Am. Ceram. Soc., Bd. 85, Nr. 12, 08. August 2002, Seiten 3099-3101) beschreiben die Herstellung von $Al_2O_3$-$Ti_3SiC_2$ durch Versintern von $Al_2O_3$ und $Ti_3SiC_2$, wobei in der Veröffentlichung die Hypothese geäußert wird, wonach Anteile des $Ti_3SiC_2$ in Anwesenheit von Kohlenstoff zu TiC und Si reagiert haben könnten. C. Racault et al ("Solid-state synthesis and characterization of the ternary phase Ti3SiC2", Journal of Materials Science, Bd. 29, 19. Januar 1994, Seiten 3384-3392) vermuten, dass dabei etwaig gebildetes Si weiter mit Kohlenstoff zu SiC reagieren wird.

Überraschenderweise hat sich im Rahmen der Erfindung herausgestellt, dass MAX-Phasen aufgrund dieser Eigenschaften die Eigenschaften von feuerfesten Erzeugnissen auf Basis $Al_2O_3$ erheblich verbessern können und insbesondere dazu beitragen können, feuerfeste Erzeugnisse auf Basis $Al_2O_3$ zur Verfügung zu stellen, durch die die vorstehenden Aufgaben gelöst werden können. Die Erfindung beruht dabei insbesondere auch auf der überraschenden erfindungsgemäßen Erkenntnis, dass sich zumindest ein Teil der vorgenannten vorteilhaften Eigenschaften von MAX-Phasen auf feuerfeste Erzeugnisse auf Basis $Al_2O_3$ übertragen, soweit diese Erzeugnisse wenigstens eine MAX-Phase umfassen. Dabei wurde erfindungsgemäße festgestellt, dass sich insbesondere die guten Eigenschaften von MAX-Phasen hinsichtlich deren Thermoschockbeständigkeit auf feuerfeste Erzeugnisse auf Basis $Al_2O_3$ übertragen lassen. Dabei wurde erfindungsgemäß festgestellt, dass die Thermoschockbeständigkeit von feuerfesten Erzeugnissen auf Basis $Al_2O_3$ mit einem steigenden Anteil an MAX-Phasen zunimmt.

Insoweit weisen feuerfeste Erzeugnisse auf Basis $Al_2O_3$, die erfindungsgemäß wenigstens eine MAX-Phase umfassen, eine hohe Thermoschockbeständigkeit und Gefügeelastizität auf.

Ferner weisen die feuerfesten Erzeugnisse auf Basis $Al_2O_3$, die erfindungsgemäß wenigstens eine MAX-Phase umfassen, auch bei hohen Temperaturen unter oxidierenden Bedingungen aufgrund der Oxidationsbeständigkeit der MAX-Phasen eine hohe thermische Stabilität auf.

Darüber hinaus erweisen sich feuerfeste Erzeugnisse auf Basis $Al_2O_3$, die erfindungsgemäß wenigstens eine MAX-Phase umfassen, aufgrund der hohen Resistenz der MAX-Phasen gegenüber chemischen Angriffen als hoch korrosionsbeständig.

Insbesondere können feuerfeste Erzeugnisse auf Basis $Al_2O_3$, soweit diese wenigstens eine MAX-Phase aufweisen, eine hohe Dichte und geringe Porosität bei einer dennoch gleichzeitig hohen Gefügeelastizität aufweisen. Insofern können die erfindungsgemäßen Erzeugnisse beispielsweise eine Dichte im Bereich von 3,6 bis 4,0 $g/cm^3$ aufweisen, also beispielsweise auch eine Dichte von wenigstens 3,65 $g/cm^3$, von 3,7 $g/cm^3$ oder von wenigstens 3,75 $g/cm^3$; ferner kann die Dichte beispielsweise auch bei höchstens 3,95 $g/cm^3$, 3,9 $g/cm^3$ oder bei höchstens 3,85 $g/cm^3$

liegen. Die offene Porosität der erfindungsgemäßen Erzeugnisse kann beispielsweise im Bereich von 2 bis 4 Volumen-% liegen, also beispielsweise auch bei wenigstens 2,2 oder 2,3 oder 2,4 oder 2,5 oder 2,55 Volumen-% und beispielsweise auch bei höchstens 3,8 oder 3,6 oder 3,4 oder 3,2 oder 3,0 oder 2,9 oder 2,8 oder 2,7 oder 2,65 Volumen-%.

Erfindungsgemäß hat sich herausgestellt, dass die Eigenschaften eines feuerfesten Erzeugnisses auf Basis $Al_2O_3$ insbesondere dann verbessert werden können, soweit dieses wenigstens eine MAX-Phase in einem Anteil von wenigstens 0,5 Masse-% aufweist. Insofern kann erfindungsgemäß vorgesehen sein, dass das erfindungsgemäße Erzeugnis einen Anteil an MAX-Phasen von wenigstens 0,5 Masse-% aufweist, also beispielsweise auch von wenigstens 0,6 oder 0,8 oder 1 oder 1,2 oder 1,4 oder 1,6 oder 1,8 oder 2,0 oder von wenigstens 2,5 Masse-%.

Ferner hat sich erfindungsgemäß herausgestellt, dass die feuerfesten Eigenschaften von feuerfesten Erzeugnissen auf Basis $Al_2O_3$ durch einen zu großen Anteil an MAX-Phasen auch nachteilig beeinflusst werden können. Beispielsweise kann die Festigkeit der Erzeugnisse aufgrund der verhältnismäßig geringen Härte der MAX-Phasen durch einen zu hohen Anteil der MAX-Phasen im Erzeugnis nachteilig beeinflusst werden. Ferner hat sich erfindungsgemäß herausgestellt, dass Anteile der MAX-Phasen eines erfindungsgemäßen Erzeugnisses oxidieren können, soweit ein erfindungsgemäßes Erzeugnis bei hinreichend hohen Einsatztemperaturen einer oxidierenden Atmosphäre, beispielsweise Luft, ausgesetzt ist. In diesem Fall kann es in weiterer Folge jedoch zur Bildung von niedrigschmelzenden Phasen im Erzeugnis kommen, die die feuerfesten Eigenschaften des Erzeugnisses, insbesondere beispielsweise seine Festigkeitseigenschaften, insbesondere seine Heißfestigkeit, negativ beeinflussen. Insofern hat es sich erfindungsgemäß als vorteilhaft erwiesen, den Anteil an MAX-Phasen im erfindungsgemäßen Erzeugnis zu begrenzen, und zwar insbesondere auf einen Anteil von maximal 40 Masse-% MAX-Phasen im Erzeugnis. Demnach kann vorgesehen sein, dass MAX-Phasen höchstens in einem Anteil von 40 Masse-% im Erzeugnis vorliegen. In manchen Fällen, insbesondere bei einer Beaufschlagung des erfindungsgemäßen Erzeugnisses mit mechanischer Belastung und Temperatur in oxidativer Atmopshäre können die Eigenschaften des Erzeugnisses weiter verbessert werden, soweit der Anteil an MAX-Phasen unter 40 Masse-%, jedoch insbesondere auch bei wenigstens 0,5 Masse-% MAX-Phasen liegt. Insofern kann das erfindungsgemäße Erzeugnis beispielsweise einen Anteil an MAX-Phasen von höchstens 40, 35, 30, 25, 20, 15, 14, 13, 12, 11, 10, 9, 8, 7, 6, 5 oder 4 Masse-% aufweisen.

Die hierin gemachten Angaben in Masse-% sind jeweils bezogen auf die Gesamtmasse des erfindungsgemäßen Erzeugnisses beziehungsweise des erfindungsgemäßen Versatzes, soweit im Einzelfall nicht anders angegeben. Die hierin gemachten Angaben in Volumen-% sind jeweils bezogen auf das Gesamtvolumen des erfindungsgemäßen Erzeugnisses beziehungsweise des erfindungsgemäßen Versatzes, soweit im Einzelfall nicht anders angegeben.

Das erfindungsgemäße Erzeugnis liegt auf Basis $Al_2O_3$ vor. $Al_2O_3$, also Korund, insbesondere in Form von $\alpha$-$Al_2O_3$ und/oder $\beta$-$Al_2O_3$, bildet demnach die Hauptphase des erfindungsgemäßen Erzeugnisses, liegt also in dem höchsten Masseanteil, also mit einem höheren Massenanteil als die übrigen Phasen des Erzeugnisses, im Erzeugnis vor.

Insbesondere kann $Al_2O_3$ in dem erfindungsgemäßen Erzeugnis beispielsweise in Anteilen von wenigstens 50 Masse-% vorliegen, also beispielsweise auch in Anteilen von wenigstens 55, 60, 65, 70, 75, 80, 85, 90, 91, 92, 93, 94, 95, 96, 97, 98 oder 99 Masse-%. Das Erzeugnis kann ferner beispielsweise einen Anteil an $Al_2O_3$ von höchstens 99,5 Masse-% aufweisen, also beispielsweise auch von höchstens 99, 98, 96, 95, 92, 90, 88, 85, 80, 75, 70 oder 60 Masse-%.

Wenigstens eine MAX-Phase im erfindungsgemäßen Erzeugnis liegt in Form von $Ti_3SiC_2$ vor.

Erfindungsgemäß hat sich herausgestellt, dass die Eigenschaften eines feuerfesten Erzeugnisses auf Basis $Al_2O_3$ insbesondere durch wenigstens eine dieser MAX-Phasen vorteilhaft beeinflusst werden können.

Neben den Phasen in Form von Korund und wenigstens einer MAX-Phase kann das erfindungsgemäße Erzeugnis insbesondere noch wenigstens eine der folgenden Phasen aufweisen: metallisches Aluminium, metallisches Silicium, metallisches Titan, metallisches Eisen, wenigstens ein Carbid, wenigstens ein Oxicarbonitrid, wenigstens ein SiCAlON oder wenigstens einer Legierung aus den Metallen Aluminium, Silicium, Titan oder Eisen.

Durch das Vorhandensein von metallischem Aluminium, Silicium, Titan oder Eisen sowie Legierungen daraus im Erzeugnis kann die Korrosionsbeständigkeit des Erzeugnisses noch weiter verbessert werden, insbesondere soweit es bei der Anwendung des Erzeugnisses zur Entstehung von Rissen oder Bruchflächen im oder am Erzeugnis kommt. Solche Risse oder Bruchflächen im oder am Erzeugnis können beispielsweise durch einen mechanischen Angriff auf das Erzeugnis, durch thermomechanische Spannungen im Erzeugnis, durch einen hochkorrosiven Angriff auf das Erzeugnis oder bei erhöhten Temperaturen entstehen. Entlang dieser entstandenen Risse oder Bruchflächen liegen dann metallisches Aluminium, Silicium, Titan oder Eisen oder Legierungen daraus, welche bisher im Inneren des Erzeugnisses vor der umgebenden Atmosphäre geschützt war, frei, womit sie nunmehr der umgebenden Atmosphäre ausgesetzt sind. Im Falle einer oxidierenden Atmosphäre werden das metallische Aluminium, Silicium, Titan oder Eisen oder Legierungen daraus oxidiert, was mit einer Volumenvergrößerung einhergeht. Hierdurch können die entstandenen Risse und Bruchflächen geschlossen werden, wodurch ein Eindringen von korrosiven Medien, beispielsweise Schlacken oder Schmelzen, in das Erzeugnis unterbunden werden kann. Aufgrund dieses Selbstheilungseffektes kann die Korrosionsbeständigkeit des Erzeugnisses weiter verbessert werden.

Bevorzugt weist das Erzeugnis Anteile an metallischem Aluminium, Silicium, Titan oder Eisen oder Legierungen daraus in einer Gesamtmasse im Bereich von 0,1 bis 1 Masse-% auf.

Carbide kann das erfindungsgemäße Erzeugnis beispielsweise in Form wenigstens eines der folgenden Carbide aufweisen: Titancarbid (TiC) oder Siliciumcarbid (SiC), beispielsweise in Anteilen in einer Gesamtmasse im Bereich von 0,1 bis 5 Masse-%, also beispielsweise auch in Anteilen von wenigstens 0,5 oder 1,5 oder 1,8 Masse-% und beispielweise auch in Anteilen von höchstens 4,5 oder 4 oder 3,5 oder 3 oder 2,5 oder 2,2 Masse-%.

Oxicarbonitride kann das erfindungsgemäße Erzeugnis beispielsweise in Form von Aluminiumoxicarbonitrid aufweisen, beispielsweise in Form von $Al_{28}C_6N_6O_{21}$, beispielsweise in Anteilen von 0,1 bis 1 Masse-%.

Bei SiCAlON handelt es sich bekanntermaßen und Mischkristalle auf Basis der Elemente Si, C, Al, O und N. Diese entstehen insbesondere auf Basis SiC, in welchem Si- und C-Atome teilweise durch Al-, O- und N-Atome ersetzt werden. SiCAlONe können beispielsweise in Anteilen von 0,1 bis 1 Masse-% im Erzeugnis vorliegen.

Erfindungsgemäß wurde festgestellt, dass die Korrosionsbeständigkeit des erfindungsgemäßen Erzeugnisses weiter verbessert werden kann, soweit dieses wenigstens ein Carbid, wenigstens ein Oxicarbonitrid oder wenigstens ein SiCAlON, insbesondere in den vorbezeichneten Anteilen aufweist.

Erfindungsgemäß wurde festgestellt, dass die vorteilhaften Eigenschaften des erfindungsgemäßen Erzeugnisses, also insbesondere seine hohe Thermoschockbeständigkeit, seine hohe Gefügeelastizität, seine geringe Sprödigkeit sowie seine hohe Korrosionsbeständigkeit verschlechtert werden können, wenn neben den vorbezeichneten Phasen weitere Phasen vorliegen, da das erfindungsgemäße Erzeugnis sehr sensibel auf solch weitere Phasen reagieren kann.

Insofern kann erfindungsgemäß vorgesehen sein, dass das erfindungsgemäße Erzeugnis neben den vorbezeichneten Phasen, also $Al_2O_3$, MAX-Phasen, metallischem Aluminium, metallischem Silicium, metallischem Titan, metallischen Eisen, Legierungen aus den vorgenannten Metallen, Carbiden, Oxicarbonitriden und SiCAlONen keine weiteren Phasen aufweist oder solch weitere Phasen allenfalls in geringen Anteilen aufweist, insbesondere in einem Anteil unter 2 Masse-%, also beispielsweise auch in einem Anteil unter 1 oder unter 0,5 Masse-%.

Erfindungsgemäß wurde festgestellt, dass die Eigenschaften des erfindungsgemäßen Erzeugnisses insbesondere durch die Anwesenheit von Elementen der IA-Gruppe sowie VIIA-Gruppe des Periodensystems negativ beeinflusst werden können, auch wenn diese Elemente nur in sehr geringen Anteilen im Erzeugnis vorliegen. Insofern kann insbesondere vorgesehen sein, dass die Gesamtmasse an Lithium, Natrium und Kalium im Erzeugnis unter 2 Masse-% liegt, also beispielsweise auch unter 1 oder 0,5 Masse-%. Hinsichtlich der Elemente Fluor und Chlor kann vorgesehen sein, dass die Gesamtmasse dieser Elemente im Erzeugnis unter 0,1 Masse-% liegen, also beispielsweise auch unter 0,05 oder 0,01 Masse-%.

Das Gefüge des erfindungsgemäßen Erzeugnisses ist gebildet aus einer Matrix aus $Al_2O_3$, in die die wenigstens eine MAX-Phase eingelagert ist.

Insgesamt können in die Matrix aus $Al_2O_3$ neben der wenigstens einen MAX-Phase sämtliche weiteren Phasen des Erzeugnisses eingelagert sein.

Die in die Matrix aus $Al_2O_3$ eingelagerten Phasen des Erzeugnisses sind als voneinander isolierte "Inseln" in die Matrix aus $Al_2O_3$ eingelagert. Die Matrix aus $Al_2O_3$ bildet in dem erfindungsgemäßen Erzeugnis damit eine durch das gesamte Erzeugnis durchgehende Phase, in die die weiteren Phasen getrennt voneinander eingelagert sind.

Bevorzugt weist das Erzeugnis ein im wesentlichen isotropes Gefüge auf. Insoweit sind die Phasen des Erzeugnisses im wesentlichen gleichmäßig über das Volumen des Erzeugnisses verteilt. Die Phasen des Erzeugnisses sind damit insbesondere nicht anisotrop, beispielsweise geschichtet, über das Volumen des Erzeugnisses verteilt.

Aufgrund dieser gleichmäßigen beziehungsweise isotropen Verteilung der neben $Al_2O_3$ im Erzeugnis vorliegenden Phasen weist das Erzeugnis über das gesamte Volumen verhältnismäßig gleichmäßige Eigenschaften auf.

Hierdurch ist gewährleistet, dass das Erzeugnis auch bei nur geringen Anteilen an MAX-Phasen und sonstigen Phasen seine vorteilhaften Eigenschaften gleichmäßig über das gesamte Volumen aufweist.

Das erfindungsgemäße Erzeugnis weist insbesondere Anteile an den Elementen Aluminium, Kohlenstoff, Silicium, Titan, Stickstoff und Sauerstoff auf. Wie zuvor ausgeführt, können dabei Anteile der Elemente Aluminium, Silicium und Titan auch in elementarer Form vorliegen. Im übrigen liegen diese Elemente sowie die übrigen Elemente überwiegend nicht in elementarer Form, sondern in Form von Verbindungen im Erzeugnis vor. Die Anteile an den Elementen Aluminium, Kohlenstoff, Silicium, Titan, Stickstoff und Sauerstoff im Erzeugnis können beispielsweise wie folgt sein, wobei der Anteil eines dieser Elemente grundsätzlich unabhängig ist vom Anteil der übrigen Elemente:

Aluminium: 10 bis 60 Masse-%, also beispielsweise auch wenigstens 20, 30, 40, 42, 44, 46, 47, 48 oder 49 Masse-% und beispielsweise auch höchstens 58, 56, 55, 54, 53, 52 oder 51 Masse-%;

Kohlenstoff: 0,5 bis 10 Masse-%, also beispielsweise auch wenigstens 0,8 oder 1 Masse-% und beispielsweise auch höchstens 9, 8, 7, 6, 5, 4, 3 oder 2,5 oder 2 oder 1,7 oder 1,5 oder 1,3 oder 1,2 Masse-%;

Silicium: 0,5 bis 10 Masse-%, also beispielsweise auch wenigstens 1 oder 1,2 Masse-% und beispielsweise auch höchstens 9, 8, 7, 6, 5, 4, 3 oder 2,5 oder 2 oder 1,8 oder 1,6 oder 1,4 Masse-%;

(fortgesetzt)

| Titan: | 1 bis 30 Masse-%, also beispielsweise auch wenigstens 1,5 oder 2,5 oder 3 oder 3,5 Masse-% und beispielsweise auch höchstens 20, 15, 10, 8, 6 oder 5 oder 4 oder 3,5 Masse-%; |
| Stickstoff: | 0,01 bis 0,5 Masse-%, also beispielsweise auch wenigstens 0,02 oder 0,04 oder 0,05 oder 0,06 oder 0,07 oder 0,08 Masse-% und beispielsweise auch höchstens 0,4 oder 0,3 oder 0,2 oder 0,15 Masse-%; |
| Sauerstoff: | 30 bis 60 Masse-%, also beispielsweise auch wenigstens 35, 40 oder 42,5 oder 43 oder 43,3 Masse-% und beispielsweise auch höchstens 55, 50, 48, 46 oder 45 oder 44,5 oder 44 oder 43,7 Masse-%. |

Erfindungsgemäß kann vorgesehen sein, dass neben den Elementen Aluminium, Kohlenstoff, Silicium, Titan, Eisen, Stickstoff und Sauerstoff weitere Elemente in einem Anteil unter 2 Masse-% im Erzeugnis vorliegen, also beispielsweise auch unter 1,5 oder 1 oder 0,5 Masse-%.

Zur Herstellung des hierin beschriebenen, erfindungsgemäßen Erzeugnisses wird ein Versatz mit den folgenden Merkmalen zur Verfügung gestellt:

Der Versatz umfasst eine oder mehrere Komponenten, die Aluminium, Kohlenstoff, Silicium und Titan umfassen; die Anteile an Aluminium, Kohlenstoff, Silicium und Titan im Versatz, die durch die Komponenten in den Versatz eingetragen sind, liegen in den folgenden Bereichen, jeweils bezogen auf die Gesamtmasse des Versatzes:

Aluminium, berechnet als $Al_2O_3$: 10 bis 97 Masse-%, also beispielsweise auch wenigstens 20, 30, 40, 50, 55, 60, 65, 70 oder 75 Masse-% und beispielsweise auch höchstens 95, 92, 90, 88, 86, 84, 82 oder 80 Masse-%;
Kohlenstoff: 1 bis 30 Masse-% also beispielsweise auch wenigstens 2, 3, 4, 5 oder 6 Masse-% und beispielsweise auch höchstens 25, 20, 15, 13, 12, 11, 10, 9 oder 8 Masse-%;
Silicium, berechnet als $SiO_2$: 1 bis 20 Masse-% also beispielsweise auch wenigstens 2, 3, 4, 5, 6, 7 oder 8 Masse-% und beispielsweise auch höchstens 18, 16, 15, 14, 13, 12, 11, 10 oder 9 Masse-%;
Titan, berechnet als $TiO_2$: 1 bis 50 Masse-%. also beispielsweise auch wenigstens 1,5 oder 2 oder 2,5 oder 3 oder 3, 5 oder 4 Masse-% und beispielsweise auch höchstens 45, 40, 35, 30, 25, 20, 15, 14, 13, 12, 10, 9, 8, 7 oder 6 Masse-%.

Bei den Komponenten, also den Rohstoffen des Versatzes, kann es sich um eine oder mehrere Komponenten beziehungsweise Rohstoffe handeln, durch die Anteile an Aluminium, Kohlenstoff, Silicium und Titan für die Herstellung des erfindungsgemäßen Erzeugnisses zur Verfügung gestellt werden können. Dabei können beispielsweise durch eine Komponente auch mehrere der Elemente Aluminium, Kohlenstoff, Silicium oder Titan zur Verfügung gestellt werden. Beispielsweise kann durch eine Komponente in Form von Mullit Aluminium, Silicium und Sauerstoff zur Verfügung gestellt werden. Soweit das aus dem Versatz hergestellte Erzeugnis neben den Elementen Aluminium, Kohlenstoff, Silicium oder Titan noch die weiteren Elemente Stickstoff und Sauerstoff aufweist, handelt es sich insbesondere um Reaktionsprodukte der Komponenten des Versatzes mit Stickstoff und Sauerstoff aus der Luft beziehungsweise Atmosphäre während der Temperaturbeaufschlagung des Versatzes zur Herstellung des Erzeugnisses.

Überraschend wurde erfindungsgemäß festgestellt, dass durch einen Versatz mit den erfindungsgemäßen Merkmalen ein erfindungsgemäßes Erzeugnis herstellbar ist, das neben etwaigen weiteren Phasen insbesondere auch MAX-Phasen in Form wenigstens einer der folgenden MAX-Phasen aufweist: $Ti_3SiC_2$ oder wenigstens eine MAX-Phase für die gilt:

M= Cr, Zr, Nb, Ti oder V
A= Al, Si oder Sn
X= C oder N.

Die wenigstens eine Aluminium umfassende Komponente des Versatzes kann insbesondere in Form wenigstens einer der folgenden Komponenten vorliegen: Sinterkorund, Schmelzkorund, kalzinierte Tonerde, Tabulartonerde oder Bauxit. Besonders bevorzugt liegt die Aluminium umfassende Komponente in Form von kalzinierter Tonerde vor.

Die Aluminium umfassende Komponente kann Aluminium grundsätzlich in einer beliebigen Form aufweisen, bevorzugt jedoch überwiegend in Form von $Al_2O_3$. Bevorzugt weist die Aluminium umfassende Komponente einen Anteil an $Al_2O_3$ von über 50 Masse-% auf, bezogen auf die Aluminium umfassende Komponente, also beispielsweise auch von über 55, 60, 65, 70, 75, 80, 85, 90, 92, 94, 95, 96, 97, 98 oder 99 Masse-%.

Die Aluminium umfassende Komponente weist bevorzugt eine Korngröße d90 von höchsten 500 $\mu$m auf.

Die Aluminium umfassende Komponente liegt bevorzugt in Anteilen im Bereich von 10 bis 98 Masse-% im Versatz vor, also beispielsweise auch in Anteilen von wenigstens 20, 30, 40, 50, 55, 60, 65, 68, 70 oder 71 Masse-% und beispielsweise auch in Anteilen von höchstens 95, 90, 85, 80, 75 oder 73 Masse-%.

Die wenigstens eine Kohlenstoff umfassende Komponente des Versatzes liegt bevorzugt in Form wenigstens einer der folgenden Komponenten vor: Graphit (natürlicher oder synthetischer Graphit), Anthrazit, Ruß, Petrolkoks oder Harz, beispielsweise Silikonharz oder Phenolharz. Besonders bevorzugt liegt die Kohlenstoff umfassende Komponente in Form von Graphit vor.

Der Anteil an Kohlenstoff der Kohlenstoff umfassenden Komponente beträgt bevorzugt mehr als 92 Masse-%, bezogen auf die Masse der Kohlenstoff umfassenden Komponente, also beispielsweise auch von über 94, 95 oder 96 Masse-%.

Die Kohlenstoff umfassende Komponente weist bevorzugt eine Korngröße d90 unter 1 mm auf.

Die Kohlenstoff umfassende Komponente liegt in Anteilen im Bereich von 1 bis 30 Masse-% im Versatz vor, also beispielsweise auch in Anteilen von wenigstens 2, 3, 4, 5, 6 oder 7 Masse-% und beispielsweise auch in Anteilen von höchstens 25, 20, 15, 14, 13, 12, 11, 10 oder 9 Masse-%.

Die wenigstens eine Silicium umfassende Komponente des Versatzes kann insbesondere in Form wenigstens einer der folgenden Komponente vorliegen: Kaolin, Schamotte, wenigstens ein feuerfester Ton (insbesondere solche mit der Hauptphase Kaolinit), wenigstens ein Mullit-Rohstoff (insbesondere Sintermullit, Schmelzmullit oder mullitisierte Rohstoffe), Quarzit, Quarzsand oder Zirkon (Zirkonsilicat, $ZrSiO_4$). Besonders bevorzugt liegt die Silicium umfassende Komponente in Form von Kaolin vor.

Die Silicium umfassende Komponente kann Silicium grundsätzlich in einer beliebigen Form aufweisen, besonders bevorzugt jedoch in Form wenigstens einer der Komponenten Kaolin oder Schamotte. Nach einer ganz besonders bevorzugten Ausführungsform liegt die Silicium umfassende Komponente in Form von Kaolin vor, insbesondere beispielsweise in calcinierter Form, was den Vorteil hat, dass es bei der Temperaturbehandlung eines Versatzes, der solch calcinierten Kaolin umfasst, zu keinem entweichen von Wasseranteilen des Kaolins kommen kann.

Die Korngröße der Silicium umfassenden Komponente kann beispielsweise in einer Korngröße d90 unter 50 $\mu m$ vorliegen, also beispielsweise auch in einer Korngröße d90 unter 40 $\mu m$, 30 $\mu m$, 20$\mu m$ oder unter 10 $\mu m$.

Die wenigstens eine Silicium umfassende Komponente, insbesondere Kaolin, kann bevorzugt in Anteilen im Bereich von 1 bis 40 Masse-% im Versatz vorliegen, also beispielsweise auch in Anteilen von wenigstens 2, 4, 6, 8, 10, 12, 13 oder 14 Masse-% und beispielsweise auch in Anteilen von höchstens 35, 30, 28, 26, 24, 22, 20, 18, 17 oder 16 Masse-%.

Die wenigstens eine Titan umfassende Komponente des Versatzes kann insbesondere in Form wenigstens einer der folgenden Rohstoffe vorliegen: Rutil oder Aluminiumtitanat. Bevorzugt liegt die Titan umfassende Komponente in Form von Rutil vor, beispielsweise in Form von natürlichem Rutilsand.

Die Titan umfassende Komponente kann Titan grundsätzlich in jeder beliebigen Form aufweisen, bevorzugt jedoch in Form von $TiO_2$. Bevorzugt weist die Titan umfassende Komponente einen Anteil an $TiO_2$ von über 95 Masse-% auf, bezogen auf die Titan umfassende Komponente, also beispielsweise auch von über 96, 97, 98 oder 99 Masse-%.

Bevorzugt liegt die Titan umfassende Komponente in einer Körngröße d90 bis 200 $\mu m$ oder darunter vor.

Die wenigstens eine Titan umfassende Komponente kann beispielsweise in folgenden Anteilen im Bereich von 1 bis 50 Masse-% im Versatz vorliegen, also beispielsweise auch in einem Anteil von wenigstens 1,5 oder 2 oder 2,5 oder 3 oder 3,5 oder 4 oder 4,5 Masse-% und beispielsweise auch in einem Anteil von höchstens 40, 30, 20, 15, 12, 10, 8 oder 7,5 oder 7 oder 6,5 oder 6 oder 5,5 Masse-%.

Auch wenn der Versatz die Anteile an Aluminium, Silicium und Titan insoweit grundsätzlich in jeder beliebigen Form aufweisen kann, werden deren Anteile in dem Versatz nachfolgend in Form ihrer Oxide angegeben, wie in der Feuerfesttechnologie üblich.

Völlig überraschend hat sich im Rahmen der Erfindung herausgestellt, dass durch einen erfindungsgemäßen Versatz, insbesondere soweit dieser die vorstehend genannten Komponenten beziehungsweise Rohstoffe aufweist, ein feuerfestes Erzeugnis auf Basis $Al_2O_3$ ausbildbar ist, das wenigstens eine der folgenden MAX-Phasen umfasst: $Ti_3SiC_2$ oder wenigstens eine MAX-Phase für die gilt:

M= Cr, Zr, Nb, Ti oder V
A= Al, Si oder Sn
X= C oder N.

Dieser Umstand ist umso überraschender vor dem Hintergrund des Umstandes, wonach bisher zur Herstellung von MAX-Phasen regelmäßig sehr teure Rohstoffe beziehungsweise Precursoren verwendet werden mussten. Durch Verwendung des erfindungsgemäßen Versatzes steht nunmehr jedoch eine neuartige Technologie zur Verfügung, MAX-Phasen durch wesentlich günstigere Rohstoffe zu synthetisieren. Insbesondere steht durch die Erfindung nunmehr eine Technologie zur Verfügung, MAX-Phasen für feuerfeste Anwendungen kostengünstig und wirtschaftlich zur Verfügung zu stellen. Im Gegensatz hierzu konnten MAX-Phasen aufgrund der teuren Precursoren bisher nicht für feuerfeste Anwendungen eingesetzt werden, wenngleich das technische Potential von MAX-Phasen für feuerfeste Anwendungen bereits erkannt worden war.

Ferner hat sich erfindungsgemäß überraschend herausgestellt, dass durch einen erfindungsgemäßen Versatz ein feuerfestes Erzeugnis auf Basis $Al_2O_3$ herstellbar ist, das neben MAX-Phasen auch die weiteren bevorzugten Phasen des erfindungsgemäßen Erzeugnisses aufweist, also insbesondere wenigstens eine der folgenden Phasen: metallisches Aluminium, metallisches Silicium, metallisches Titan, metallisches Eisen, wenigstens ein Carbid, wenigstens ein Oxicarbonitrid, wenigstens ein SiCAlON oder wenigstens eine Legierung aus den Metallen Aluminium, Slilicium, Titan oder Eisen.

Erfindungsgemäß hat sich herausgestellt, dass der erfindungsgemäße Versatz sehr sensibel auf weitere Komponenten beziehungsweise Rohstoffe reagieren kann, die der Versatz neben den vorbezeichneten Komponenten aufweist. Insoweit können beispielsweise weitere Komponenten neben den vorbezeichneten Komponenten dazu führen, dass MAX-Phasen in dem Erzeugnis nur in reduziertem Umfang gebildet werden. Insofern kann erfindungsgemäß vorgesehen sein, dass der erfindungsgemäße Versatz neben den vorbezeichneten Komponenten weitere Komponenten in einem Anteil unter 2 Masse-% aufweist, also beispielsweise auch in einem Anteil unter 1,5 oder 1 oder 0,5 Masse-%.

Insbesondere kann vorgesehen sein, dass der erfindungsgemäße Versatz Anteile an Elementen der IA-Gruppe sowie VIIA-Gruppe des Periodensystems nur in sehr geringen Anteilen aufweist. Insofern kann insbesondere vorgesehen sein, dass die Gesamtmasse an Lithium (berechnet als Lithiumoxid), Natrium (berechnet als Natriumoxid) und Kalium (berechnet als Kaliumoxid) im Versatz unter 2 Masse-% liegt, also beispielsweise auch unter 1 oder 0,5 Masse-%. Hinsichtlich der Elemente Fluor und Chlor kann vorgesehen sein, dass die Gesamtmasse dieser Elemente im Versatz unter 0,1 Masse-% liegen, also beispielsweise auch unter 0,05 oder 0,01 Masse-%.

Gegenstand der Erfindung ist auch ein Verfahren zur Herstellung des erfindungsgemäßen feuerfesten Erzeugnisses, das die folgenden Schritte umfasst:

Zur Verfügungstellung eines erfindungsgemäßen Versatzes;
Beaufschlagen des Versatzes mit Temperatur;
Abkühlen des mit Temperatur beaufschlagten Versatzes.

Zur gleichmäßigen Vermischung der Komponenten des Versatzes kann dieser vor der Temperaturbeaufschlagung gemischt werden. Beispielsweise kann vorgesehen sein, den Versatz während des Mischens zu granulieren. Dem Versatz kann Wasser zugegeben werden. Soweit der Versatz zu Granalien gemischt wird, kann durch diesen Wasseranteil die Bildung von Granalien erleichtert werden.

Der gegebenenfalls gemischte feuerfeste Versatz wird anschließend mit Temperatur beaufschlagt. Insbesondere wird der Versatz mit einer solchen Temperatur beaufschlagt, dass die Komponenten des Versatzes wenigstens eine MAX-Phase ausbilden, insbesondere wenigstens eine der folgenden MAX-Phasen: $Ti_3SiC_2$ oder wenigstens eine MAX-Phase für die gilt:

M= Cr, Zr, Nb, Ti oder V
A= Al, Si oder Sn
X= C oder N.

Ferner wird der Versatz bevorzugt mit einer solchen Temperatur beaufschlagt, dass die Komponenten des Versatzes neben den vorbezeichneten MAX-Phasen wenigstens eine der weiteren Phasen ausbilden, die das erfindungsgemäße Erzeugnis bevorzugt neben den MAX-Phasen aufweist, also insbesondere wenigstens eine der folgenden Phasen: metallisches Aluminium, metallisches Silicium, metallisches Titan, metallisches Eisen, wenigstens ein Carbid, wenigstens ein Oxicarbonitrid, wenigstens ein SiCAlON oder wenigstens eine Legierung aus den Metallen Aluminium Silicium, Titan oder Eisen.

Bevorzugt wird der Versatz mit einer Temperatur über 2.000°C beaufschlagt. Bevorzugt wird der Versatz bei Temperaturen über 2.000°C erschmolzen.

Die Dauer, für die der Versatz mit Temperatur beaufschlagt werden muss, um ihn zu erschmelzen, hängt insbesondere von der Größe der zu erschmelzenden Charge ab. Soweit die Schmelzcharge beispielsweise 10 bis 30 t beträgt, kann beispielsweise eine Schmelzdauer im Bereich von 12 bis 24 Stunden genügen, den Versatz vollständig zu erschmelzen.

Besonders bevorzugt wird der Versatz erschmolzen, also derart mit Temperatur beaufschlagt, dass aus dem Versatz eine Schmelze gebildet wird. Grundsätzlich kann der Versatz mit beliebigen der aus dem Stand der Technik bekannten Schmelzaggregaten erschmolzen werden, beispielsweise mittels eines Elektrolichtbogenofens.

Theoretisch möglich, wenngleich erfindungsgemäß nicht bevorzugt, wäre es auch, den erfindungsgemäßen Versatz einem keramischen Brand zu unterwerfen und nicht zu erschmelzen. Dabei könnte der gegebenenfalls gemischte und granulierte Versatz zuvor zusätzlich zu einem Grünkörper, also einem ungebrannten feuerfesten Formkörper, geformt werden, beispielsweise durch Pressen, und anschließend einem keramischen Brand unterworfen werden.

Den mit Temperatur beaufschlagten Versatz beziehungsweise die Schmelze lässt man abschließend abkühlen.

Nach dem Abkühlen wird ein feuerfestes Erzeugnis auf Basis $Al_2O_3$, das MAX-Phasen umfasst, erhalten.

Das erhaltene Erzeugnis kann anschließend weiter behandelt werden, beispielsweise zerkleinert und beispielsweise mit einer gewünschten Korngröße beziehungsweise Korngrößenverteilung aufbereitet werden.

Das zerkleinerte Erzeugnis kann insbesondere als Rohstoff für die Herstellung feuerfester Produkte verwendet werden.

Gegenstand der Erfindung ist damit auch die Verwendung des erfindungsgemäßen Erzeugnisses beziehungsweise des durch den erfindungsgemäßen Versatz herstellbaren sowie durch das erfindungsgemäße Verfahren hergestellten Erzeugnisses als Rohstoff für die Herstellung feuerfester Produkte.

Besonders bevorzugt erfolgt die erfindungsgemäße Verwendung mit der Maßgabe, dass das Erzeugnis als ein Rohstoff für die Herstellung von feuerfesten Produkten in Form von Magnesia-Kohlenstoff-Steinen (MgO-C-Steinen), von kohlenstoffhaltigen nicht-basischen Steinen (insbesondere Alumina-Kohlenstoff-Steinen, $Al_2O_3$-C-Steinen) oder Alumina-Magnesia-Kohlenstoff-Steinen (AMC-Steinen) verwendet wird. Insoweit kann Versätzen zur Herstellung von Magnesia-Kohlenstoff-Steinen, Alumina-Kohlenstoff-Steinen, oder Alumina-Magnesia-Kohlenstoff-Steinen beispielsweise als weitere Komponente das erfindungsgemäße Erzeugnis zugegeben werden.

Gegenstand der Erfindung ist ferner ein feuerfestes Erzeugnis, das aus dem erfindungsgemäßen Versatz hergestellt ist und/oder das durch ein erfindungsgemäßes Verfahren hergestellt ist.

Insoweit weist das aus dem Versatz herstellbare beziehungsweise hergestellte Erzeugnis beziehungsweise das durch das erfindungsgemäße Verfahren hergestellte Erzeugnis die Eigenschaften des erfindungsgemäßen feuerfesten Erzeugnisses auf.

Die Verwendung des erfindungsgemäßen Erzeugnisses als Rohstoff zur Herstellung eines feuerfesten Produktes kann nach einer bevorzugten Ausführungsform mit der Maßgabe erfolgen, dass das feuerfeste Erzeugnis dem Versatz zur Herstellung eines feuerfesten Produktes zusammen mit weiteren Rohstoffen zugegeben wird.

Erfindungsgemäß wurde im übrigen festgestellt, dass das erfindungsgemäße Erzeugnis als Werkstoff für die Metallbearbeitung geeignet ist. Gegenstand der Erfindung ist damit auch die Verwendung des erfindungsgemäßen Erzeugnisses beziehungsweise des durch den erfindungsgemäßen Versatz herstellbaren sowie durch das erfindungsgemäße Verfahren hergestellten Erzeugnisses als Werkstoff für die Metallbearbeitung, insbesondere als Werkstoff für Schneidwerkzeuge oder spanabhebende Werkzeuge für die Metallbearbeitung, insbesondere beispielsweise Zerspanungswerkzeuge in Form von Fräs-, Bohr-, Dreh- oder Schleifwerkzeugen für die Metallbearbeitung.

Weitere Merkmale der Erfindung ergeben sich aus den Unteransprüchen, den Figuren sowie der nachfolgenden Figurenbeschreibung.

Sämtliche Merkmale der Erfindung können, einzeln oder in Kombination beliebig miteinander kombiniert sein.

Ein Ausführungsbeispiel der Erfindung wird nachfolgend näher erläutert:

Beispiel

Zur Herstellung eines erfindungsgemäßen feuerfesten Erzeugnisses wurde zunächst ein erfindungsgemäßer Versatz zur Verfügung gestellt, der eine Aluminium umfassende Komponente in Form von calcinierter Tonerde, eine Kohlenstoff umfassende Komponente in Form von natürlichem Graphit, eine Silicium umfassende Komponente in Form von Kaolin sowie eine Titan umfassende Komponente in Form von natürlichem Rutilsand aufwies. Der Versatz wies eine Gesamtmasse von etwa 400 kg auf.

Die calcinierte Tonerde wies einen Anteil an $Al_2O_3$ von über 99 Masse-% und einen Anteil an $Na_2O$ von unter 0,4 Masse-% auf, jeweils bezogen auf die Gesamtmasse der calcinierten Tonerde. Die calcinierte Tonerde wies eine Korngröße d90 unter 100 $\mu$m auf. Der Anteil der calcinierten Tonerde an der Gesamtmasse des Versatzes lag bei 72 Masse-%.

Der natürliche Graphit wies einen Anteil an Kohlenstoff von über 94,5 Masse-% und einen Anteil an Tonmineralien unter 5 Masse-% auf, jeweils bezogen auf die Gesamtmasse des Graphits. Der Graphit lag in einer Korngröße d90 unter 500 $\mu$m vor. Der Anteil des Graphits an der Gesamtmasse des Versatzes lag bei 8 Masse-%.

Das Kaolin wies einen Anteil an Kaolinit und anderen Tonmineralien von über 97 Masse-% und einen Anteil an $Fe_2O_3$, $Na_2O$ und $K_2O$ unter 1,6 Masse-% auf, jeweils bezogen auf die Gesamtmasse des Kaolins. Kaolin lag in einer Korngröße d90 unter 20 $\mu$m vor. Der Anteil des Kaolins an der Gesamtmasse des Versatzes lag bei 15 Masse-%.

Der verwendete $TiO_2$-Träger wies einen Anteil an $TiO_2$ von über 98 Masse-% vor, bezogen auf die Gesamtmasse des $TiO_2$-Trägers. Die Korngröße d90 des $TiO_2$-Trägers lag unter 150 $\mu$m. Der Anteil des $TiO_2$-Trägers an der Gesamtmasse des Versatzes lag bei 5 Masse-%.

Die Anteile an Aluminium, Kohlenstoff, Silicium und Titan im Versatz lagen in den folgenden Bereichen:

Aluminium, berechnet als $Al_2O_3$: 78 Masse-%;

(fortgesetzt)

| Kohlenstoff: | 7,6 Masse-%; |
|---|---|
| Silicium, berechnet als $SiO_2$: | 8,61 Masse-%; |
| Titan, berechnet als $TiO_2$: | 5 Masse-%; |
| $Fe_2O_3$: | 0,17 Masse-%; |
| $Na_2O + K_2O$: | 0,43 Masse-%; |
| Rest: | 0,19 Masse-%. |

Der Versatz wurde anschließend gemischt.

Der entsprechend aufbereitete Versatz wurde anschließend für etwa 6 Stunden in reduzierender Atmosphäre im Elektrolichtbogenofen durch den Lichtbogen beaufschlagt, wodurch der Versatz auf Temperaturen über etwa 2.000 °C erwärmt wurde und sich aus dem Versatz eine Schmelze bildete.

Die Schmelze wurde anschließend abgekühlt, woraufhin man ein erfindungsgemäßes Erzeugnis in Form eines Schmelzblocks erhielt.

Dieses Erzeugnis wies als Hauptphase Korund ($Al_2O_3$) auf. Als weitere Phasen wies das erfindungsgemäße Erzeugnis eine MAX-Phase in Form von $Ti_3SiC_2$ in einem Anteil von 2 Masse-% sowie die weiteren Phasen Titancarbid (TiC) in einem Anteil von unter 2 Masse-% und Siliciumcarbid (SiC) in einem Anteil von unter 1 Masse-%. Weitere Phasen in Form von nitridischen und carbidischen Phasen, insbesondere auch SiCAlON-Phasen, lagen in einem Anteil von unter 1 Masse-% sowie metallisches Aluminium, metallisches Silicium, metallisches Titan und metallisches Eisen sowie Legierungen daraus in einem Gesamtanteil von unter 1 Masse-% vor. Daneben lagen weitere Phasen in einem Gesamtanteil von unter 2 Masse-% vor

Das Erzeugnis wies eine Dichte von 3,8 g/cm³ und eine offene Porosität von 2,6 Volumen-% auf.

Sämtliche der hierin gemachten Angaben zu Dichte und offener Porosität wurden bestimmt gemäß British Standard BS 1902-3.16:1990. Dabei wurde die Dichte bei einem Quecksilbderdruck von 0,52 psia (poundforce per square inch) gemessen. Die offene Porosität wurde durch Messung bei 0,52 psia und 33.000 psia errechnet.

In dem Erzeugnis bildete der Korund eine durchgehende Matrix, in die die weiteren Phasen als voneinander isolierte Inseln eingelagert waren. Insgesamt wies das Erzeugnis ein im wesentliches isotropes Gefüge auf, in dem die Phasen im wesentlichen gleichmäßig über das gesamte Volumen des Erzeugnisses verteilt waren.

Die nachfolgenden Figuren zeigen vergrößerte Ansichten auf Anschliffe des Erzeugnisses.

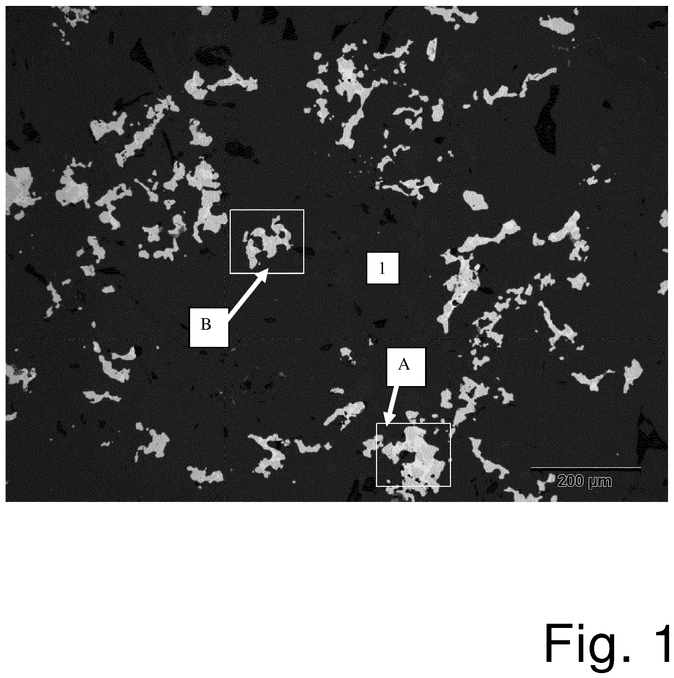

Figur 1 zeigt einen Ausschnitt mit einer Fläche von etwa 1,2 mm x 0,9 mm. Der Balken unten rechts im Bild entspricht einer Länge von 200 µm. Zu erkennen in Figur 1 ist die dunkle Matrix 1 aus Korund, in die die weiteren, in Figur 1 helleren Phasen inselartig eingebettet sind. Eine erste Insel ist in Figur 1 mit A und eine zweite Insel mit B bezeichnet.

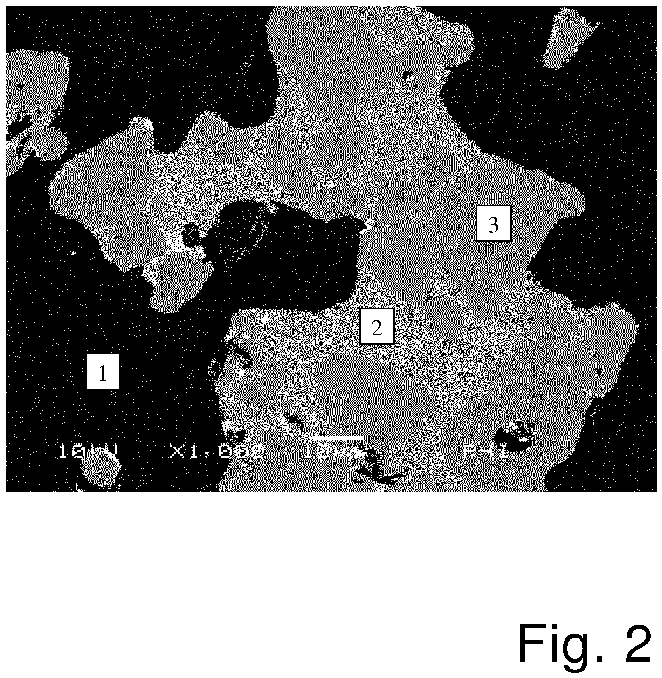

Der in Figur 1 mit A bezeichnete Ausschnitt ist in Figur 2 vergrößert dargestellt. Der Ausschnitt in Figur 2 entspricht einer Größe von etwa 130 µm x 100 µm. Der weiße Balken unten in der Bildmitte entspricht einer Länge von 10 µm. Zu erkennen ist die dunkle Matrix 1 aus Korund die mit dem Bezugszeichen 1 gekennzeichnet ist. Die hellgraue MAX-Phase in Form von $Ti_3SiC_2$ ist mit dem Bezugszeichen 2 gekennzeichnet, während die Phase in Form von TiC, die gegenüber der MAX-Phase 2 ein etwas dunkleres grau aufweist, mit dem Bezugszeichen 3 gekennzeichnet ist.

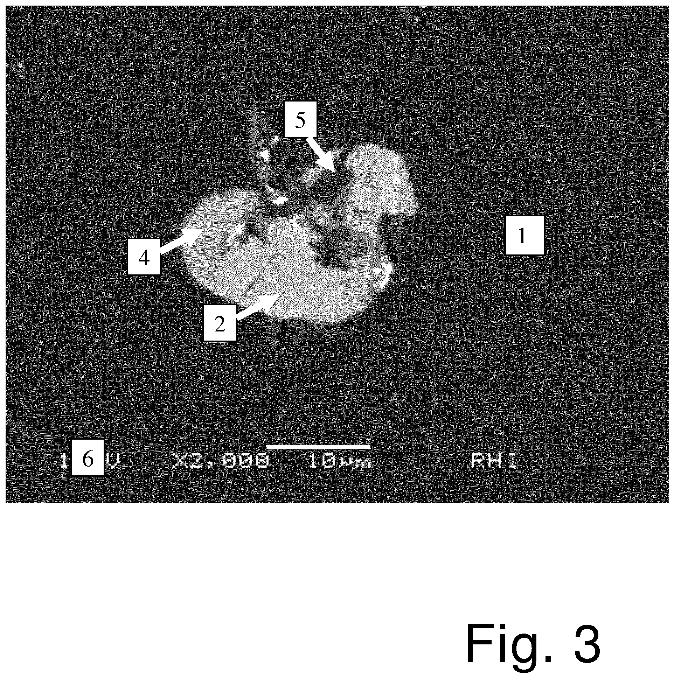

Ein weiterer Ausschnitt aus der Ansicht gemäß Figur 1 ist in Figur 3 dargestellt. Der Ausschnitt entspricht einer Größe von etwa 65 µm x 50 µm. Der weiße Balken unten in der Bildmitte entspricht einer Länge von 10 µm. Zu erkennen ist in Figur 3 die wiederum dunkle Bindematrix 1 in Form von Korund, in die inselartig hellere Phasen eingebettet sind. Die in Figur 3 dargestellte Insel weist eine mit dem Bezugszeichen 2 gekennzeichnete MAX-Phase in Form von $Ti_3SiC_2$, mit dem Bezugszeichen 4 gekennzeichnetes metallisches Aluminium, Silicium und Titan sowie mit dem Bezugszeichen 5 gekennzeichnetes Siliciumcarbid auf. Als eigene Insel in die Matrix 1 aus Korund eingelagertes Aluminiumoxicarbonitrid ($Al_{28}C_6N_6O_{21}$) ist mit dem Bezugszeichen 6 gekennzeichnet.

Zur Verwendung des nach dem Ausführungsbeispiel hergestellten feuerfesten Erzeugnisses als Rohstoff zur Herstellung eines feuerfesten Erzeugnisses wurde dieses gekörnt, also zu einem körnigen Gut aufbereitet. Hierzu wurde das als Schmelzblock vorliegende Erzeugnis zunächst durch die aus dem Stand der Technik bekannten Mittel zu körnigem Gut zerkleinert und anschließend als Rohstoff zur Herstellung eines feuerfesten Erzeugnisses zur Verfügung gestellt.

Da die Poren des Erzeugnisses bei der Zerkleinerung als Sollbruchstellen wirken, unterscheiden sich die Dichte und offene Porosität des körnigen Gutes und des Schmelzblockes voneinander. Dabei ist die Dichte des körnigen Gutes tendenziell größer als die Dichte des Schmelzblockes und die offene Porosität des körnigen Gutes tendenzielle kleiner als die offene Porosität des Schmelzblockes.

**Patentansprüche**

1. Versatz zur Herstellung eines feuerfesten Erzeugnisses auf Basis $Al_2O_3$, das wenigstens eine MAX-Phase in Form von $Ti_3SiC_2$ umfasst, mit folgenden Merkmalen:

   1.1 der Versatz umfasst eine oder mehrere Komponenten, die Aluminium, Kohlenstoff, Silicium und Titan umfassen;
   1.2 die Anteile an Aluminium, Kohlenstoff, Silicium und Titan im Versatz, die durch die Komponenten in den Versatz eingetragen sind, liegen in den folgenden Bereichen, jeweils bezogen auf die Gesamtmasse des Versatzes:

   1.2.1 Aluminium, berechnet als $Al_2O_3$: 10 bis 97 Masse-%;
   1.2.2 Kohlenstoff: 1 bis 30 Masse-%;
   1.2.3 Silicium, berechnet als $SiO_2$: 1 bis 20 Masse-%;
   1.2.4 Titan, berechnet als $TiO_2$: 1 bis 50 Masse-%.

2. Versatz nach Anspruch 1 mit einer Aluminium umfassenden Komponente in Form wenigstens einer der folgenden Komponenten: Sinterkorund, Schmelzkorund, calcinierte Tonerde, Tabulartonerde oder Bauxit.

3. Versatz nach wenigstens einem der vorhergehenden Ansprüche mit einer Kohlenstoff umfassenden Komponente in Form wenigstens einer der folgenden Komponenten: Graphit, Anthrazit, Petrolkoks oder Ruß.

4. Versatz nach wenigstens einem der vorhergehenden Ansprüche mit einer Silicium umfassenden Komponente in Form wenigstens einer der folgenden Komponenten: Kaolin, Schamotte, wenigstens ein feuerfester Ton, wenigstens ein Mullit umfassender Rohstoff, Quarzit, Quarzsand oder Zirkon.

5. Versatz nach wenigstens einem der vorhergehenden Ansprüche mit einer Titan umfassenden Komponente in Form von Rutil.

6. Verfahren zu Herstellung eines feuerfesten Erzeugnisses auf Basis $Al_2O_3$, das wenigstens eine MAX-Phase in Form von $Ti_3SiC_2$ umfasst, das die folgenden Schritte umfasst:

   6.1 Zur Verfügungstellung eines Versatzes nach wenigstens einem der vorhergehenden Ansprüche;
   6.2 Beaufschlagen des Versatzes mit Temperatur;
   6.3 Abkühlen des mit Temperatur beaufschlagten Versatzes.

7. Feuerfestes Erzeugnis auf Basis $Al_2O_3$, das wenigstens eine MAX-Phase in Form von $Ti_3SiC_2$ umfasst, das durch ein Verfahren gemäß Anspruch 6 hergestellt ist und das wenigstens eine der folgenden Phasen in einer Gesamtmasse im Bereich von 0,1 bis 1 Masse-% aufweist: metallisches Aluminium, metallisches Silicium, metallisches Titan, metallisches Eisen oder wenigstens eine Legierung aus wenigstens zweien dieser Metalle.

8. Erzeugnis nach Anspruch 7, das wenigstens eine der folgenden Phasen aufweist: wenigstens ein Carbid, wenigstens ein Oxicarbid, wenigstens ein Oxicarbonitrid oder wenigstens ein SiCAlON.

9. Erzeugnis nach wenigstens einem der Ansprüche 7 bis 8, bei dem das Gefüge gebildet ist aus einer Matrix aus $Al_2O_3$, in die wenigstens eine MAX-Phase eingelagert ist.

10. Verwendung des feuerfesten Erzeugnisses nach wenigstens einem der Ansprüche 7 bis 9 als Rohstoff zur Herstellung eines feuerfesten Erzeugnisses.

**Claims**

1. A batch for the production of a refractory product based on $Al_2O_3$, which comprises at least one MAX phase in the form of $Ti_3SiC_2$, having the following features:

   1.1 the batch comprises one or more components which comprise aluminium, carbon, silicon and titanium;
   1.2 the proportions of aluminium, carbon, silicon and titanium in the batch, which are introduced into the batch by the components, are in the following ranges, respectively with respect to the total weight of the batch:

1.2.1 aluminium, calculated as $Al_2O_3$: 10% to 97% by weight;
1.2.2 carbon: 1% to 30% by weight;
1.2.3 silicon, calculated as $SiO_2$: 1% to 20% by weight;
1.2.4 titanium, calculated as $TiO_2$: 1% to 50% by weight.

2. The batch as claimed in claim 1, having an aluminium-comprising component in the form of at least one of the following components: sintered corundum, fused corundum, calcined alumina, tabular alumina or bauxite.

3. The batch as claimed in at least one of the preceding claims, having a carbon-comprising component in the form of at least one of the following components: graphite, anthracite, petroleum coke or carbon black.

4. The batch as claimed in at least one of the preceding claims, having a silicon-comprising component in the form of at least one of the following components: kaolin, fire clay, at least one refractory clay, at least one raw material comprising mullite, quartzite, quartz sand or zircon.

5. The batch as claimed in at least one of the preceding claims, having a titanium-comprising component in the form of rutile.

6. A process for the production of a refractory product based on $Al_2O_3$, which comprises at least one MAX phase in the form of $Ti_3SiC_2$, comprising the following steps:

6.1 providing a batch as claimed in at least one of the preceding claims;
6.2 applying heat to the batch;
6.3 cooling the batch to which heat has been applied.

7. A refractory product based on $Al_2O_3$, which comprises at least one MAX phase in the form of $Ti_3SiC_2$, which is produced by means of a process as claimed in claim 6 and which contains at least one of the following phases in a total weight in the range 0.1% to 1% by weight: metallic aluminium, metallic silicon, metallic titanium, metallic iron or at least one alloy of at least two of said metals.

8. The product as claimed in claim 7, comprising at least one of the following phases: at least one carbide, at least one oxycarbide, at least one oxycarbonitride or at least one SiCAlON.

9. The product as claimed in at least one of claims 7 to 8, in which the microstructure is formed by a matrix of $Al_2O_3$ in which the at least one MAX phase is embedded.

10. Use of the refractory product as claimed in at least one of claims 7 to 9, as a raw material for the production of a refractory product.

**Revendications**

1. Composition destinée à la préparation d'un produit réfractaire sur la base d'$Al_2O_3$ qui comprend au moins un phase MAX sous la forme de $Ti_3SiC_2$, avec les caractéristiques suivantes :

1.1 la composition comprend un ou plusieurs composantes, comprenant l'aluminium, le carbone, le silicium et le titane ;
1.2 les parts en aluminium, en carbone, en silicium et en titane dans la composition qui sont introduites dans la composition via les composants se situent dans les ordres suivantes, chaque fois rapportés à la masse total de la composition :

1.2.1 Aluminium, calculé en tant qu'$Al_2O_3$ :

de 10 à 97 % en masse ;

1.2.2 Carbone : de 1 à 30 % en masse ;

1.2.3 Silicium, calculé en tant $SiO_2$ :

de 1 à 20 % en masse ;

1.2.4 Titane, calculé en tant que $TiO_2$ :

de 1 à 50 % en masse.

**2.** Composition selon la revendication 1, avec un composant comprenant de l'aluminium sous la forme d'au moins l'un des composants suivants : le corindon fritté, le corindon fondu, l'alumine, l'alumine tabulaire ou la bauxite.

**3.** Composition selon au moins l'une quelconque des revendications précédentes, un avec composant comprenant du carbone, sous la forme d'au moins l'un des composants suivants : le graphite, l'anthracite, le coke de pétrole ou le noir de carbone.

**4.** Composition selon au moins l'une quelconque des revendications précédentes, avec un composant comprenant du silicium sous la forme d'au moins l'un des composants suivants : le kaolin, la chamotte, au moins un argile réfractaire, au moins une matière première comprenant de la mullite, la quartzite, un sable silicieux ou le zircon.

**5.** Composition selon au moins l'une quelconque des revendications précédentes, avec un composant comprenant du titane sous la forme de rutile.

**6.** Procédé destiné à la fabrication d'un produit réfractaire sur base d'$Al_2O_3$, qui comprend au moins une phase MAX sous la forme de $Ti_3SiC_2$ comportant les étapes suivantes :

6.1 de la mise à disposition d'une composition selon au moins l'une quelconque des revendications précédentes ;
6.2 de l'exposition de la composition à une température ;
6.3 du refroidissement de la composition exposée une température.

**7.** Produit réfractaire sur la base d'$Al_2O_3$, qui comprend au moins une phase MAX sous la forme de $Ti_3SiC_2$, qui est fabriqué d'après un procédé selon la revendication 6 et qui comporte au moins l'une des phases suivantes dans une masse totale de l'ordre de 0,1 à 1 % en masse : de l'aluminium métallique, du silicium métallique, du titane métallique, du fer métallique ou au moins un alliage d'au moins deux desdits métaux.

**8.** Produit selon la revendication 7, qui comporte au moins l'une des phases suivantes : au moins un carbure, au moins un oxycarbure, au moins un oxycarbonitrure ou au moins un SiCAlON.

**9.** Produit selon au moins l'une quelconque des revendications précédentes, pour lequel la structure est formée d'un matrice en qui comprend au moins une phase MAX sous la forme de $Al_2O_3$ dans laquelle est emmagasinée au moins une phase MAX.

**10.** Utilisation du produit réfractaire selon au moins l'une quelconque des revendications 7 à 9 en tant que matière première pour la fabrication d'un produit réfractaire.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MILADIN RADOVIC ; MICHEL W. BARSOUM.** *American Ceramic Society Bulletin,* April 2013, vol. 92 (3
- Microstructure and properties of Al2O3-TiC-Ti3SiC2 composites fabricated by spark plasma sintering. **L. F. LIU et al.** Advances in Applied Ceramics: Structural, functional and bioceramics. Maney publishing, 01. Oktober 2010, vol. 109, 394-398
- **Y. M. LUO et al.** Effect of Composition on Poperties of Alumina/Titanium Silicon Carbide Composites. *J. Am. Ceram. Soc.,* 08. August 2002, vol. 85 (12), 3099-3101
- **C. RACAULT et al.** Solid-state synthesis and characterization of the ternary phase Ti3SiC. *Journal of Materials Science,* 19. Januar 1994, vol. 29, 3384-3392